# EUROPEAN PATENT APPLICATION

(11) **EP 3 324 613 A1**
(43) Date of publication of application: **23.05.2018**
(21) Application number: 17179983.6
(22) Date of filing: 06.07.2017
(51) Int. Cl.: H04N 5/369

(54) **EVENT-BASED SENSOR COMPRISING POWER CONTROL CIRCUIT**

(30) Priority: 21.11.2016 KR 20160154951
(71) Applicant: Samsung Electronics Co., Ltd., Gyeonggi-do 16677 (KR)
(72) Inventor: SUH, Yun Jae, 16697 Suwon-si, Gyeonggi-do (KR); KIM, Sung Ho, 17083 Yongin-si, Gyeonggi-do (KR); KIM, Jun Seok, 18447 Hwaseong-si, Gyeonggi-do (KR); RYU, Hyun Surk, 18454 Hwaseong-si, Gyeonggi-do (KR)
(74) Representative: Kuhnen & Wacker Patent- und Rechtsanwaltsbüro PartG mbB

(57) **Abstract**

An event-based sensor includes: a pixel array having a plurality of pixels, and configured to output an activation signal in response to sensing an input to the pixel array; and a controller configured to output a control signal for supplying power selectively to the pixels based on the activation signal or a user input so that a portion of the pixels is powered on while another portion of the pixels is powered off.

## Description

### BACKGROUND

### 1. Field

Example embodiments of the inventive concept relate to an event-based sensor comprising a power control circuit.

### 2. Description Of Related Art

Human-computer interaction (HCI) between humans and computers is undertaken using user interfaces. Various types of user interfaces, recognizing user input, can provide natural interactions between humans and computers. To recognize a user input, various types of sensor may be used. To provide natural interactions, sensors that respond quickly to the user input are required. In addition, in the case of various types of mobile devices, there is a need for consuming low amounts of power while performing many smart functions through user interfaces. Accordingly, sensors, having low power consumption, fast response rates, and improved reliability suitable for sensing purposes are required.

### SUMMARY

According to an aspect of an example embodiment, there is provided an event-based sensor which may include: a pixel array having a plurality of pixels, and configured to output an activation signal in response to sensing an input to the pixel array; and a controller configured to output a control signal for supplying power selectively to the pixels based on the activation signal or a user input so that a portion of the pixels is powered on while another portion of the pixels is powered off.

According to an aspect of an example embodiment, there is provided an event-based sensor which may include: a pixel circuit configured to output an activation signal in response to sensing an input to the pixel circuit; and a power control circuit to supply or interrupt power to the pixel circuit based on a control signal input to the power control circuit.

According to an aspect of an example embodiment, there is provided an event-based sensor which may include: a pixel array having a plurality of pixels each of which is configured to sense an input and output an activation signal in response to the input; and a controller configured to output a control signal to control selective power supply to the pixels by pixel according to an operating mode determined based on characteristics of the activation signal or a user input.

### BRIEF DESCRIPTION OF DRAWINGS

The above, and other aspects, features, and advantages of the example embodiments will be more clearly understood from the following detailed description when taken in conjunction with the accompanying drawings, in which:
FIG. 1 is a block diagram of a sensing device according to an example embodiment;
FIG. 2 is a view of a control block and a pixel array according to an example embodiment;
FIG. 3 is a view of a pixel of a pixel array according to an example embodiment;
FIG. 4 is a view of a power control circuit including a logic gate circuit according to an example embodiment;
FIG. 5 is a view of a power control circuit including a memory cell according to an example embodiment;
FIG. 6 is a view of a power control circuit including a transistor according to an example embodiment;
FIG. 7 is a view of a power control circuit including a pull down transistor according to an example embodiment;
FIG. 8 is a view of a power control circuit including a pull down transistor according to another example embodiment;
FIG. 9 is a block diagram of a sensing device, based on a plurality of operating modes according to an example embodiment;
FIG. 10 is a view of a pixel array in a sub-sampling mode according to an example embodiment;
FIG. 11 is a view of a pixel array in a region of interest mode according to an example embodiment;
FIG. 12 is a view of a pixel array in a region blocking mode according to an example embodiment;
FIG. 13 is a view of a pixel array in a region monitoring mode according to an example embodiment;
FIG. 14 is a view of a power control circuit including a plurality of logic gates according to an example embodiment;
FIG. 15 is a view of a pixel array in a random access mode according to an example embodiment; and
FIG. 16 is a view of a pixel array, in which pixels have different power control circuit structures, according to an example embodiment.

### DETAILED DESCRIPTION OF THE EXAMPLE EMBODIMENTS

Example embodiments will hereinafter be described in detail, with reference to the attached drawings. The same reference numerals in the drawings denote identical elements.

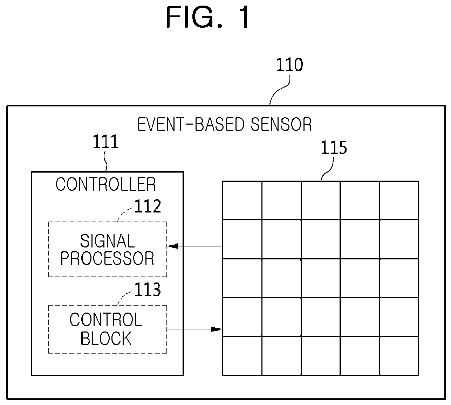

FIG. 1 is a block diagram of a sensing device according to an example embodiment. Referring to FIG. 1, an event-based sensor 110 may include a controller 111 and a pixel array 115. The event-based sensor 110 may operate based on a neuromorphic sensing technique. More specifically, pixels included in the pixel array 115 may respectively output an activation signal, in response to an input. Here, the input may be a dynamic input which may include a change in the intensity of light incident on the pixel array 115. The dynamic input may be generated by at least one of movements of an object, movements of the pixel array 115, a change in the intensity of light radiated on the object, and a change in the intensity of light emitted by the object. For example, the pixel array 115 may sense a dynamic input by a hand motion of a user, and may output an activation signal indicating the sensed dynamic input. In an example embodiment, the activation signal may be used to recognize a user gesture. Also, the activation signal may be generated by a different type of input other than the dynamic input.

The controller 111 may include a signal processor 112 and a control block 113. As illustrated in FIG. 1, the signal processor 112 and the control block 113 may be separated from each other, and the signal processor 112 and the control block 113 may also be implemented as a single configuration such as a semiconductor chip. The signal processor 112 may receive the activation signal output by the pixel array 115. The signal processor 112 may output an event signal, based on the activation signal. The event signal may include information on a location of a pixel, outputting the activation signal, information on a time when the activation signal is output, information on a time of the dynamic input is, etc. The location information may include an address of the pixel outputting the activation signal, and the time information may include a time stamp of the time when the activation signal is output and/or a time stamp of the dynamic input. The event-based sensor 110 may generate and output the event signal asynchronously to thus operate with low power consumption at a high speed, as compared to a frame-based vision sensor scanning all pixels in each frame.

The control block 113 may output a first control signal, supplying or interrupting power to at least a portion of the pixels included in the pixel array 115. Each of the pixels of the pixel array 115 may include a pixel circuit, sensing a change in the intensity of light. The pixel circuit may continuously consume current, in order to sense a change in the intensity of light. The control block 113 may reduce power consumption of the pixel array 115 by supplying power to necessary pixels or interrupting power to unnecessary pixels, using the first control signal.

The event-based sensor 110 may operate in different operating modes, depending on circumstances or a system design. Although described in detail below, the operating modes of the event-based sensor 110 may include a sub-sampling mode, a region of interest mode, a region blocking mode, a region monitoring mode, and a random access mode. The sub-sampling mode may authorize sensing at a sensing resolution lower than a maximum sensing resolution of the event-based sensor 110.
The region of interest mode may authorize sensing within a region of interest. The region blocking mode may block sensing within a blocking region. The region monitoring mode may authorize sub-sampling within a monitoring region. The random access mode may authorize or block sensing in pixel units through random access.

Although not illustrated in the drawings, according to an example embodiment, an internal or external processor of the event-based sensor 110 may set an operating mode of the event-based sensor 110, based on the event signal output by the signal processor 112. For example, when the dynamic input is not sensed by the event-based sensor 110 or an event signal is not output by the signal processor 112 during a predetermined time interval after the event-based sensor 110 is powered on, the internal or external processor may set the operating mode of the event-based sensor 110 to the sub-sampling mode to reduce a sensing resolution of the pixel array 115, thus lowering power consumption of the event-based sensor 110.

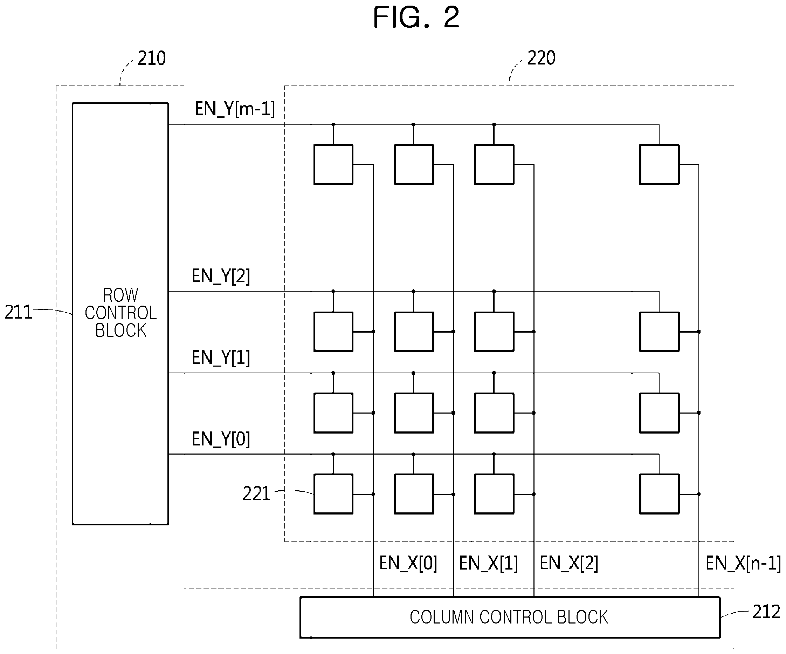

FIG. 2 is a view of a control block and a pixel array according to an example embodiment. Referring to FIG. 2, a control block 210 may include a row control block 211 and a column control block 212. Here, the control block 210 may be a part of or correspond to the control block 113 illustrated in FIG. 1

A first control signal may include a row control signal EN_Y[i], controlling a row of a pixel array 220, and a column control signal EN_X[j], controlling a column of the pixel array 220. The row control block 211 may output the row control signal EN_Y[i] to pixels of the pixel array 220 through a control line in a horizontal direction, and the column control block 212 may output the column control signal EN_X[j] to the pixels of the pixel array 220 through a control line in a vertical direction. Here, i represents a row of the pixels, and j represents a column of the pixels.

The pixel array 220 may include an m x n number of pixels. The control block 210 may output the first control signal, supplying or interrupting power to at least a portion of the pixels of the pixel array 220. For example, the control block 210 may output a row control signal EN_Y[0] and a column control signal EN_X[0] corresponding to a digital signal (hereinafter, referred to as 'digital high'), being in a high state, in order to supply power to a pixel 221. As mentioned above, the control block 210 may output the first control signal, based on an operating mode of an event-based sensor.

Each of the pixels of the pixel array 220 may include a pixel circuit, outputting an activation signal, in response to a dynamic input. For example, the pixel circuit may output the activation signal when a change in the intensity of light incident on the pixel array 220 exceeds a predetermined threshold value.

The pixel circuit may consume power to sense the dynamic input. The pixels of the pixel array 220 may supply or interrupt power to a corresponding pixel circuit, based on the first control signal. For example, upon receiving the row control signal EN_Y[0] and the column control signal EN_X[0] corresponding to digital high, the pixel 221 may supply power to the pixel circuit thereof. Conversely, upon receiving the row control signal EN_Y[i] and the column control signal EN_X[j] corresponding to a digital signal (hereinafter, 'digital low'), being in a low state, the pixels, except for the pixels 221, may interrupt power to the pixel circuit.

Each of the pixels of the pixel array 220 may include a power control circuit, controlling power supplied to the pixel circuit. The power control circuit may include at least one of a logic gate element, a memory cell, or a transistor. As illustrated in FIG. 2, a pair of control lines may be connected to a single pixel, but depending on a structure of the power control circuit, two or more pairs of control lines may be connected to a single pixel. For example, when the power control circuit includes two logic gates, receiving the first control signal, and a single logic gate, supplying or interrupting power to the pixel circuit, according to output of the two logic gates, the power control circuit may have two pairs of control lines for the two logic gates.

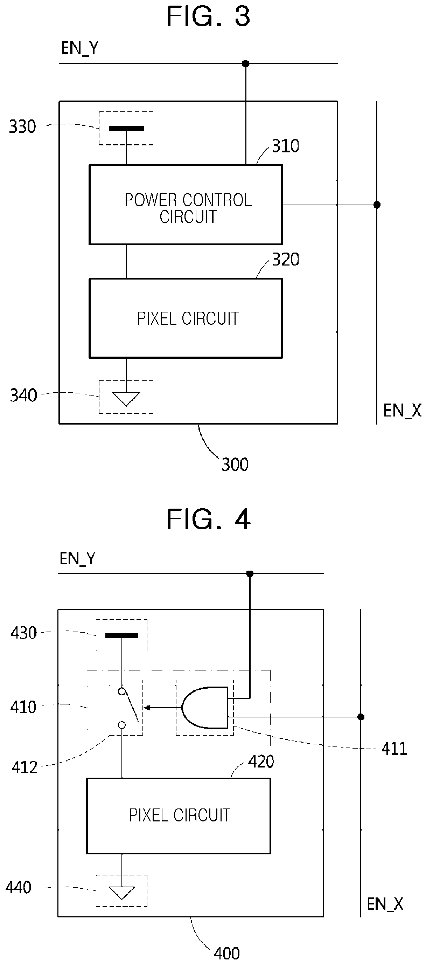

FIG. 3 is a view of a pixel of a pixel array according to an example embodiment. Referring to FIG. 3, a pixel 300 may include a power control circuit 310 and a pixel circuit 320. As illustrated in FIG. 3, a power device 330 and a ground 340 may be disposed in an interior of the pixel 300, which represents only a relationship among the power device 330, the ground 340, and the other circuits. The power device 330 and the ground 340 may be external to the pixel 300. This relationship may also be applied to power devices and grounds illustrated in the other drawings to be described below.

The power control circuit 310 may receive a first control signal from the control block 210. The first control signal may include a row control signal EN_Y and a column control signal EN_X. The power control circuit 310 may connect the power device 330 to the pixel circuit 320 or disconnect the power device 330 from the pixel circuit 320, based on the first control signal. The power device 330 may supply power to the pixel circuit 320, depending on a connection between the power device 330 and the pixel circuit 320. The pixel circuit 320 may sense a dynamic input, using power supplied by the power device 330, and may output an activation signal. The power control circuit 310 may have various structures for controlling the connection between the power device 330 and the pixel circuit 320.

FIG. 4 is a view of a power control circuit including a logic gate circuit according to an example embodiment. Referring to FIG. 4, a pixel 400 may include a power control circuit 410 and a pixel circuit 420.

The power control circuit 410 may include a logic gate circuit 411 and a switch 412. As illustrated in FIG. 4, the logic gate circuit 411 may include a single AND gate, and may also include two or more logic gates or any other type of logic gate. When the logic gate circuit 411 includes an additional logic gate, the pixel 400 may be connected to an additional control line in addition to a control line illustrated in FIG. 4.

The logic gate circuit 411 may output a second control signal, corresponding to a result of a logic operation, based on the first control signal. The logic gate circuit 411 may perform the logic operation, based on the first control signal, and may output the second control signal, according to the result of the logic operation. For example, when the row control signal EN_Y and the column control signal EN_X correspond to digital high, the AND gate of the logic gate circuit 411 may output the second control signal, corresponding to digital high. Alternatively, when at least one of the row control signal EN_Y and the column control signal EN_X corresponds to digital low, the AND gate of the logic gate circuit 411 may output the second control signal, corresponding to digital low. When the logic gate circuit 411 includes a logic gate of a different type from that of the AND gate, the logic gate circuit 411 may output the second control signal, according to a logic operation of the logic gate.

The switch 412 may open or close a connection between a power device 430 and the pixel circuit 420, based on the second control signal. For example, the switch 412 may close the connection between the power device 430 and the pixel circuit 420, based on the second control signal, corresponding to digital high, and may open the connection between the power device 430 and the pixel circuit 420, based on the second control signal, corresponding to digital low. Depending on operations of the switch 412, power supplied by the power device 430 may be supplied or interrupted to the pixel circuit 420. As illustrated in FIG. 4, the switch 412 may be disposed between the power device 430 and the pixel circuit 420, and may also be disposed between the pixel circuit 420 and the ground 440.

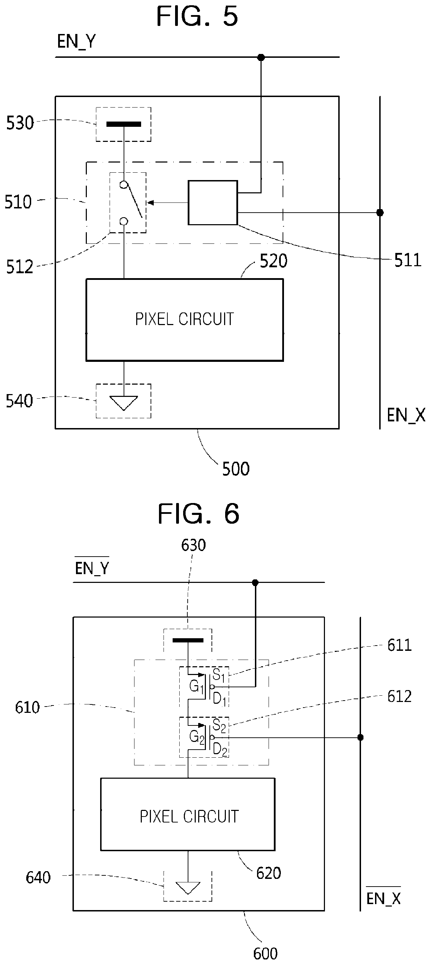

FIG. 5 is a view of a power control circuit including a memory cell according to an example embodiment. Referring to FIG. 5, a pixel 500 may include a power control circuit 510 and a pixel circuit 520.

When generating a second control signal using a logic gate circuit, pixels disposed in the same row or column may interfere with each other. For example, it may be assumed that the pixels generate the second control signal, using an AND gate. A control block may output a row control signal EN_Y[0-1] and a column control signal EN_X[0-1], corresponding to digital high, in order to supply power to a pixel P[1,1] disposed in a first row and a first column of the pixels and a pixel P[2,2] disposed in a second row and a second column of the pixels. Here, according to the row control signal EN_Y[0-1] and the column control signal EN_X[0-1], power may be supplied to a pixel P[1,2] disposed in the first row and the second column of the pixels, and a pixel P[2,1] disposed in the second row and the first column of the pixels, as well as to the pixels P[1,1] and P[2,2]. When a memory cell 511 is used, interference between such pixels may be removed.

The power control circuit 510 may include a memory cell 511 and a switch 512. The memory cell 511 may be a static random access memory (SRAM). A row control signal EN_Y and a column control signal EN_X may be used as a word line signal and a bit line signal in the memory cell 511, respectively. The memory cell 511 may store data, based on a first control signal. For example, the memory cell 511 may store data, corresponding to digital high, in the memory cell 511, according to an address, indicated by the row control signal EN_Y and the column control signal EN_X, corresponding to an address of the memory cell 511. Although not illustrated in the drawings, a data line for storing data may be connected to the memory cell 511. The memory cell 511 may output stored data to the switch 512. As the second control signal, the data output by the memory cell 511 may be provided to the switch 512.

The switch 512 may open or close a connection between the power device 530 and the pixel circuit 520, based on the data stored in the memory cell 511. For example, the switch 512 may close the connection between the power device 530 and the pixel circuit 520, based on the second control signal, corresponding to digital high, and may open the connection between the power device 530 and the pixel circuit 520, based on the second control signal, corresponding to digital low. Depending on operations of the switch 512, power supplied by the power device 530 may be supplied or interrupted to the pixel circuit 520. As illustrated in FIG. 5, the switch 512 may be disposed between the power device 530 and the pixel circuit 520, and may also be disposed between the pixel circuit 520 and a ground 540.

As illustrated in FIGs. 4 and 5, the power control circuit 410 or 510 may include a logic gate circuit or a memory cell. However, the power control circuit 410 or 510 may also have both the logic gate circuit and the memory cell, in which case the power control circuit may output the second control signal based on an interaction between the logic gate circuit and the memory cell.

FIG. 6 is a view of a power control circuit including a transistor according to an example embodiment. Referring to FIG. 6, a pixel 600 may include a power control circuit 610 and a pixel circuit 620.

The power control circuit 610 may include a transistor 611 and a transistor 612. The transistors 611 and 612 may be p-type metal-oxide-semiconductor (PMOS) transistors. The transistor 611 may receive an inverted signal E̅N̅_̅Y̅ of a row control signal EN_Y, and the transistor 612 may receive an inverted signal E̅N̅_̅X̅ of a column control signal EN_X. When the column control signal EN_X and the row control signal EN_Y correspond to digital high, the inverted signal thereof may correspond to digital low. Here, the transistors 611 and 612, which are the PMOS transistors, may be turned on to supply power to the pixel circuit 620.

Although not illustrated in the drawings, two n-type metal-oxide-semiconductor (NMOS) transistors may be connected in series between the pixel circuit 620 and a ground 640, instead of the transistors 611 and 612. Here, the column control signal EN_X and the row control signal EN_Y may not be inverted.

Referring to FIG. 6, a source (S1) of the transistor 611 may be connected to a power device 630, a drain (D1) of the transistor 611 may be connected to a source (S2) of the transistor 612, and a drain (D2) of the transistor 612 may be connected to the pixel circuit 620. In addition, an inverted signal E̅N̅_̅Y̅ may be input to a gate (G1) of the transistor 611, and an inverted signal E̅N̅_̅X̅ may be input to a gate (G2) of the transistor 612. The transistor 611 may output power, input to the source (S1), to the transistor 612, based on the inverted signal input E̅N̅_̅Y̅ to the gate (G1), and the transistor 612 may output power, input to the source (S2), to the pixel circuit 620, based on the inverted signal E̅N̅_̅X̅ input to the gate (G2).

As an example, a control block of an event-based sensor may output the row control signal EN_Y and the column control signal EN_X, corresponding to digital high, in order to supply power to the pixel circuit 620. Here, the inverted signals E̅N̅_̅Y̅, E̅N̅_̅X̅ may reach digital low. When digital low is input to the gate (G1), the transistor 611 may output power, input to the source (S1), to the transistor 612, and when digital low is input to the gate (G2), the transistor 612 may output power, input to the source (S2), to the pixel circuit 620.

As another example, the control block of the event-based sensor may output the row control signal EN_Y and the column control signal EN_X, corresponding to digital low, in order to block power supplied to the pixel circuit 620. Here, the inverted signal E̅N̅_̅X̅ ofr the inverted signal E̅N̅_̅Y̅ may reach digital high. As digital high is input to the gate (G1), the transistor 611 may block current flowing from the source (S1) to the drain (D1). Alternatively, as digital high is input to the gate (G2), the transistor 612 may block current flowing from the source (S2) to the drain (D2).

As described above, the power control circuit 610, including two transistors, according to the example embodiment of FIG. 6, may operate in substantially the same manner as a power control circuit, including an AND gate and a switch.

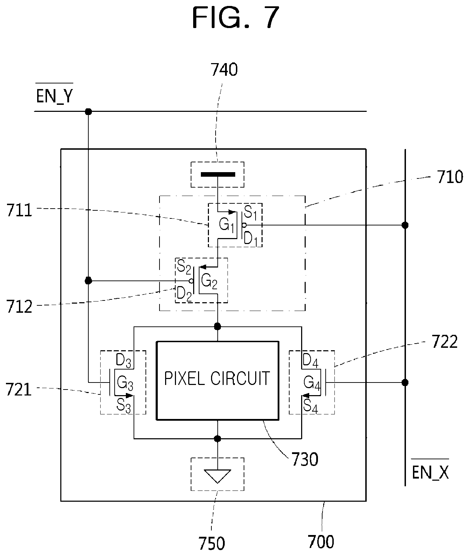

FIG. 7 is a view of a power control circuit including a pull down transistor according to an example embodiment. Referring to FIG. 7, a pixel 700 may include a power control circuit 710, pull down transistors 721 and 722, and a pixel circuit 730. The power control circuit 710 may include a transistor 711 and a transistor 712. The descriptions of FIG. 6 may apply to the transistors 711 and 712.

When digital high is input to gates (G1 and G2) of the transistors 711 and 712, drains (D1 and D2) of the transistors 711 and 712 may be floating. The floating of the drain (D2) may cause a malfunction in which power to the pixel circuit 730 is not interrupted at an appropriate point in time. By preventing the drain (D2) from floating, the pull down transistors 721 and 722 may avoid such a malfunction.

The pull down transistors 721 and 722 may be NMOS transistors. Referring to FIG. 7, drains (D3 and D4) of the pull down transistors 721 and 722 may be connected to the drain (D2), and sources (S3 and S4) of the pull down transistors 721 and 722 may be connected to a ground 750. In addition, an inverted signal E̅N̅_̅Y̅ may be input to a gate (G3) of the pull down transistor 721, and an inverted signal E̅N̅_̅X̅ may be input to a gate (G4) of the pull down transistor 722. The pull down transistor 721 may draw out electric charges, floating on the drain (D2), to the ground 750, based on the inverted signal E̅N̅_̅Y̅ input to the gate (G3), and the pull down transistor 722 may draw out electric charges, floating on the drain (D2), to the ground 750, based on the inverted signal E̅N̅_̅X̅ input to the gate (G4). Different from FIG. 7, the drain (D4) may be connected to the drain (D1). Here, the pull down transistor 722 may draw out electric charges, floating on the drain (D1), to the ground 750, based on the inverted signal E̅N̅_̅X̅ input to the gate (G4).

Thus, according to operations of the pull down transistors 721 and 722, a malfunction that may occur due to floating of the drain (D2) may be prevented.

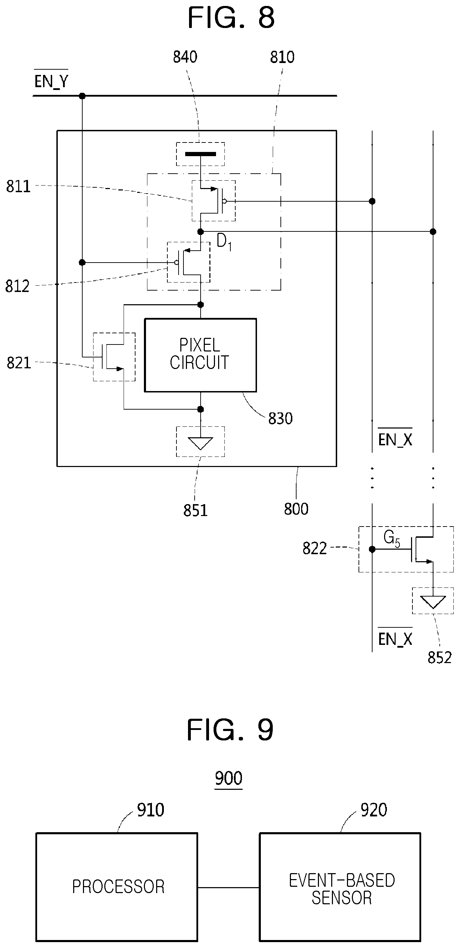

FIG. 8 is a view of a power control circuit including a pull down transistor according to another example embodiment. Referring to FIG. 8, a pixel 800 may include a power control circuit 810, a pull down transistor 821, and a pixel circuit 830. The descriptions of FIGs. 6 and 7 may apply to transistors 811 and 812 of the power control circuit 810 and the pull down transistor 821.

An event-based sensor may include a common pull down transistor 822. The common pull down transistor 822 may be disposed inside or outside a pixel array. Here, the common pull down transistor 822 may draw out electric charges, floating on a drain (D1) of the transistor 811, to a ground 852, based on an inverted signal E̅N̅_̅X̅ input to a gate (G5) of the common pull down transistor 822. The common pull down transistor 822 may also be connected to a drain, corresponding to the drain (D1) of FIG. 7, of a transistor included in other pixels, in addition to the pixel 800. Other pixels may prevent the drain of the other pixels from floating, using the common pull down transistor 822. In addition, the descriptions of the pull down transistor 722, illustrated in FIG. 7, may apply to the common pull down transistor 822.

Different from FIG. 8, the pull down transistor 821 may also be connected to a drain, corresponding to the drain (D2) of FIG. 7, of a transistor included in other pixels, in addition to the pixel 800. Here, the pull down transistor 821 may be disposed outside the pixel 800, and may be referred to as a "common pull down transistor". The other pixels may prevent the drain of the other pixels from floating, using the pull down transistor 821.

FIG. 9 is a block diagram of a sensing device, based on a plurality of operating modes, according to an example embodiment. Referring to FIG. 9, a sensing device 900 may include a processor 910 and an event-based sensor 920. As illustrated in FIG. 9, the processor 910 may be disposed outside the event-based sensor 920, and the processor 910 may also be disposed inside the event-based sensor 920.

As described above, the event-based sensor 920 may operate in various operating modes, depending on circumstances or a system design. The operating modes of the event-based sensor 920 may include a sub-sampling mode, a region of interest mode, a region blocking mode, a region monitoring mode, and a random access mode. The processor 910 may set an operating mode of the event-based sensor 920, based on an event signal output by the event-based sensor 920. The event-based sensor 920 may initially operate in a fully activated mode. The fully activated mode may allow power to be supplied to all pixels of a pixel array.

The sub-sampling mode may be provided to reduce a sensing resolution of the pixel array. According to an example embodiment, when a dynamic input is not sensed by the event-based sensor 920 during a predetermined time interval after the event-based sensor 920 is fully activated, the processor 910 may set the operating mode of the event-based sensor 920 to the sub-sampling mode. Also, when the number of event signals received from the event-based sensor 920 during the time interval is lower than a predetermined threshold, the processor 910 may set the operating mode of the event-based sensor 920 to the sub-sampling mode.

The sub-sampling mode may allow power to be supplied to only a selected portion of pixels, included in an area of the pixel array having a certain size, and power, supplied to the other pixels, to be interrupted. The processor 910 may reduce power consumption of the event-based sensor 920 through the sub-sampling mode, when a dynamic input is not sensed or an event signal is not received from the event-based sensor 920 during a predetermined period of time after the event-based sensor 920 is powered on. When the number of activation signals or event signals received during a predetermined time interval) exceeds a predetermined threshold in the sub-sampling mode, the operating mode of the event-based sensor 920 may be switched from the sub-sampling mode to the fully activated mode.

The region of interest mode may be provided to supply power to pixels included in a region of interest. According to an example embodiment, when a dynamic input is sensed in or from only a certain region or a certain set of pixels of the pixel array during a predetermined time interval, the processor 910 may set the operating mode of the event-based sensor 920 to the region of interest mode. For example, when an event signal or an activation signal, received during the predetermined time interval, is limited to the certain region, or an input area is limited to the certain region by a user interface or the like, the processor 910 may set the operating mode of the event-based sensor 920 to the region of interest mode. The region of interest mode may allow the certain region to be set as a region of interest.

The region of interest mode may also allow power to be supplied to only pixels included in the region of interest, and power, supplied to the other pixels, to be interrupted. The processor 910 may indicate pixels to be powered on and pixels to be powered off via a third control signal. The processor 910 may reduce power consumption of the event-based sensor 920 through the region of interest mode when a dynamic input is generated only in the region of interest. After the operating mode of the event-based sensor 920 is set as the region of interest mode, when a predetermined time has elapsed or the restriction by the user interface is released, the operating mode of the event-based sensor 920 may be switched from the region of interest mode to the fully activated mode.

The region blocking mode may be provided to interrupt power to the pixels included in a blocking region. According to an example embodiment, when it is determined that an event signal is generated in a certain region or a certain set of pixels of the pixel array by a useless event, the processor 910 may set the operating mode of the event-based sensor 920 to the region blocking mode. The useless event may include a dynamic input generated by a flickering object, such as a display image, a tree shaken with wind, snow, rain, and sun. The processor 910 may set the operating mode of the event-based sensor 920 to the region blocking mode, based on the cumulative number of events generated in this region. The region blocking mode may allow this region to be set as a blocking region.

The region blocking mode may also allow power, supplied to pixels included in the blocking region, to be interrupted, and power to be supplied to only the other pixels. The processor 910 may indicate pixels to be powered on and pixels to be powered off via the third control signal. The processor 910 may reduce power consumption of the event-based sensor 920 through the region blocking mode when a dynamic input is generated in this region by the flickering object. After the operating mode of the event-based sensor 920 is set as the region blocking mode, when a predetermined time has elapsed, the operating mode of the event-based sensor 920 may be switched from the region blocking mode to the fully activated mode.

The region monitoring mode may be provided to reduce a sensing resolution of a monitoring region. According to an example embodiment, when it is determined that a dynamic input is not sensed from a certain region of the pixel array during a predetermined time interval, or an event signal is generated in this region by a useless event, the processor 910 may set the operating mode of the event-based sensor 920 to the region monitoring mode. The useless event may include the dynamic input generated by the flickering object. When the number of event signals, output from the pixels included in this region during the predetermined time interval, is less than a predetermined threshold, or the cumulative number of events generated in this region exceeds a predetermined threshold, the processor 910 may set the operating mode of the event-based sensor 920 to the region monitoring mode. The region monitoring mode may allow this region to be set as a monitoring region.

The region monitoring mode may allow power to be supplied to only a portion of pixels included in the monitoring region, and power, supplied to the other pixels outside the monitoring region, to be interrupted. The processor 910 may indicate pixels to be powered on and pixels to be powered off via the third control signal. The processor 910 may reduce power consumption of the event-based sensor 920 through the region monitoring mode when a dynamic input is not sensed from this region during a predetermined time interval, or a dynamic input is generated in this region by the flickering object. When the number of event signals received during a predetermined time interval exceeds a predetermined threshold, or a predetermined time interval has elapsed after the operating mode of the event-based sensor 920 is set as the region monitoring mode, the operating mode of the event-based sensor 920 may be switched from the region monitoring mode to the fully activated mode.

The random access mode may be provided to authorize or block sensing in pixel units. The random access mode may allow certain pixels of the pixel array, to be powered on or off. According to an example embodiment, when it is determined that a certain pixel of the pixel array is overheated, a malfunction is sensed from this pixel, or this pixel is dead, the processor 910 may set the operating mode of the event-based sensor 920 to the random access mode. The processor 910 may set the operating mode of the event-based sensor 920 to the random access mode, according to temperature of this pixel, or as a normal event signal is not received from this pixel. The random access mode may allow this pixel to be powered off, and the other pixels to be powered on. The processor 910 may indicate pixels to be powered on and pixels to be powered off via the third control signal.

The random access mode may allow a portion of the pixels of the pixel array to be separately powered off to thus be used in parallel to the other modes. The processor 910 may reduce power consumption of the event-based sensor 920 through the random access mode and may prevent a malfunction due to a portion of the pixels of the pixel array when the portion of the pixels is problematic. When a temperature of an overheated pixel normally drops, the processor 910 may output the third control signal to supply power back to the pixel.

Referring to FIG. 2, the third control signal may indicate pixels required to be driven. For example, the third control signal may include digital values of the column control signal EN_X[j] and the row control signal EN_Y[i].
The control block 210 may output digital high or digital low to the control line, based on the third control signal. A processor may transmit the third control signal to the control block 210 in a parallel or serial manner. When the processor transmits the third control signal to the control block 210 in the serial manner, the control block 210 may load the third control signal through a shift operation. In an example embodiment, the control block 210 may include a shift register for the shift operation.

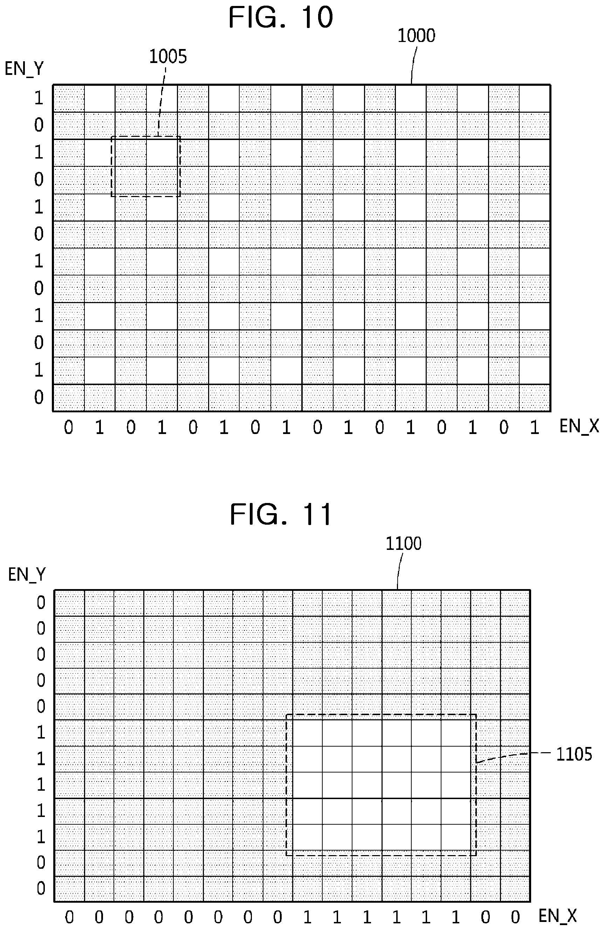

FIG. 10 is a view of a pixel array in the sub-sampling mode according to an example embodiment. Referring to FIG. 10, a pixel array 1000 and a region 1005 are illustrated. A power control circuit, included in each pixel of the pixel array 1000, may include an AND gate and a switch, or may include transistors. As described above, the pixel array 1000 may reduce a sending resolution of the pixel array 1000 in the sub-sampling mode. FIG. 10 illustrates an example in which the sensing resolution of the pixel array 1000 is reduced to 1/4 of a maximum resolution thereof. A control block may output a row control signal EN_Y and a column control signal EN_X illustrated in FIG. 10, based on the third control signal. Ones and zeros of the row control signal EN_Y and the column control signal EN_X may correspond to digital high and digital low, respectively. As illustrated in FIG. 10, non-shaded pixels refer to pixels that are powered on, and shaded pixels refer to pixels that are powered off. This relationship may also apply to the row control signal EN_Y, the column control signal EN_X, and the pixels illustrated in the other drawings to be described below. In response to the row control signal EN_Y and the column control signal EN_X, power may be supplied to only one of four pixels included in the region 1005.

FIG. 11 is a view of a pixel array in a region of interest mode according to an example embodiment. Referring to FIG. 11, a pixel array 1100 and a region 1105 are illustrated. The region 1105 refers to a region of interest. A power control circuit, included in each pixel of the pixel array 1100, may include an AND gate and a switch, or may include transistors. As described above, the pixel array 1000 may supply power to only pixels included in the region 1005 in the region of interest mode. A control block may output a row control signal EN_Y and a column control signal EN_X illustrated in FIG. 11, based on the third control signal. In response to the row control signal EN_Y and the column control signal EN_X, only the pixels included in the region 1105 may be powered on, and the other pixels may be powered off.

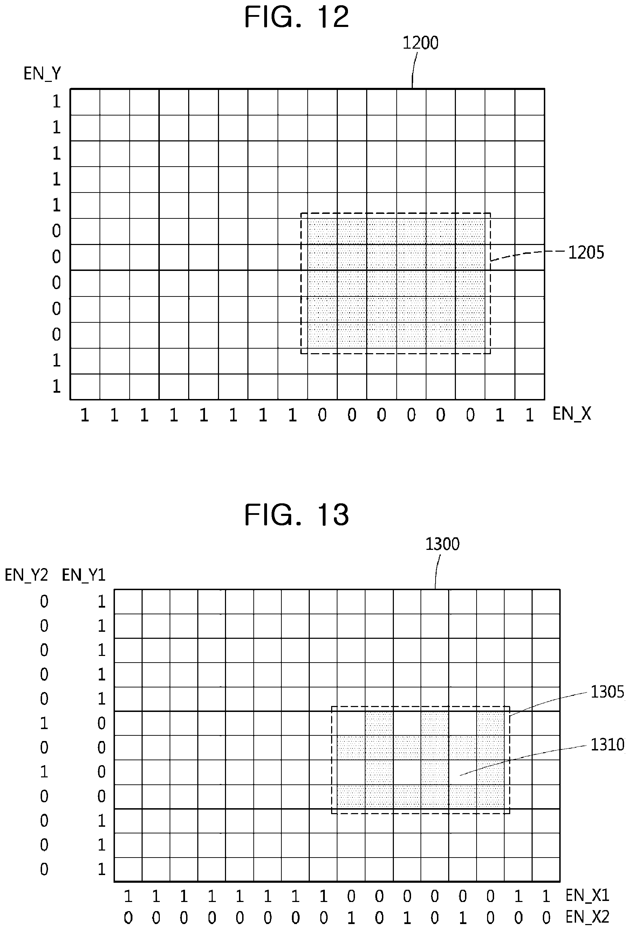

FIG. 12 is a view of a pixel array in a region blocking mode according to an example embodiment. Referring to FIG. 12, a pixel array 1200 and a region 1205 are illustrated. The region 1205 refers to a blocking region. A power control circuit, included in each pixel of the pixel array 1200, may include an OR gate and a switch. As described above, the pixel array 1200 may interrupt power supplied to pixels included in the region 1205 in the region blocking mode. A control block may output a row control signal EN_Y and a column control signal EN_X illustrated in FIG. 12, based on the third control signal. In response to the row control signal EN_Y and the column control signal EN_X, the pixels included in the region 1205 may be powered off, and the other pixels may be powered on.

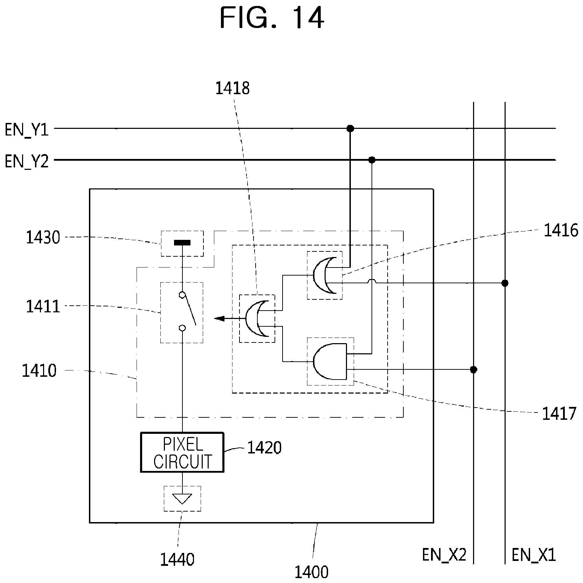

FIG. 13 is a view of a pixel array in a region monitoring mode according to an example embodiment. Referring to FIG. 13, a pixel array 1300 and regions 1305 and 1310 are illustrated. The region 1305 refers to a monitoring region. A power control circuit, included in each pixel of the pixel array 1300, may include a plurality of gates and a switch. The power control circuit will be described later with reference to FIG. 14. As described above, the pixel array 1300 may reduce a sensing resolution of the region 1305 in the region monitoring mode. FIG. 13 illustrates an example in which the resolution of the region 1305 is reduced to 1/4 of a maximum resolution thereof. A control block may output row control signals EN_Y1 and EN_Y2 and column control signals EN_X1 and EN_X2 illustrated in FIG. 13, based on the third control signal. In response to the row control signals EN_Y1 and EN_Y2 and the column control signals EN_X1 and EN_X2, only one of four pixels included in the region 1305 may be powered on, and the other pixels may be powered off.

FIG. 14 is a view of a power control circuit including a plurality of logic gates according to an example embodiment. Referring to FIG. 14, a pixel 1400 may include a power control circuit 1410 and a pixel circuit 1420.

The power control circuit 1410 may include a logic gate circuit and a switch 1411. The logic gate circuit may include logic gates 1416, 1417, and 1418. The logic gate 1416 may be supplied with the row control signal EN_Y1 and the column control signal EN_X1, and the logic gate 1417 may be supplied with the row control signal EN_Y2 and the column control signal EN_X2. The logic gate 1418 may be supplied with output signals of the logic gates 1416 and 1417. The logic gate 1418 may output the second control signal, based on the output signals of the logic gates 1416 and 1417.

The switch 1411 may open or close a connection between a power device 1430 and the pixel circuit 1420, based on the second control signal. For example, the switch 1411 may close the connection between the power device 1430 and the pixel circuit 1420, based on the second control signal, corresponding to digital high, and may open the connection between the power device 1430 and the pixel circuit 1420, based on the second control signal, corresponding to digital low. Depending on operations of the switch 1411, power supplied by the power device 1430 may be supplied or interrupted to the pixel circuit 1420. FIG. 13 illustrates an example of power supply in response to the row control signals EN_Y1 and EN_Y2 and the column control signals EN_X1 and EN_X2.

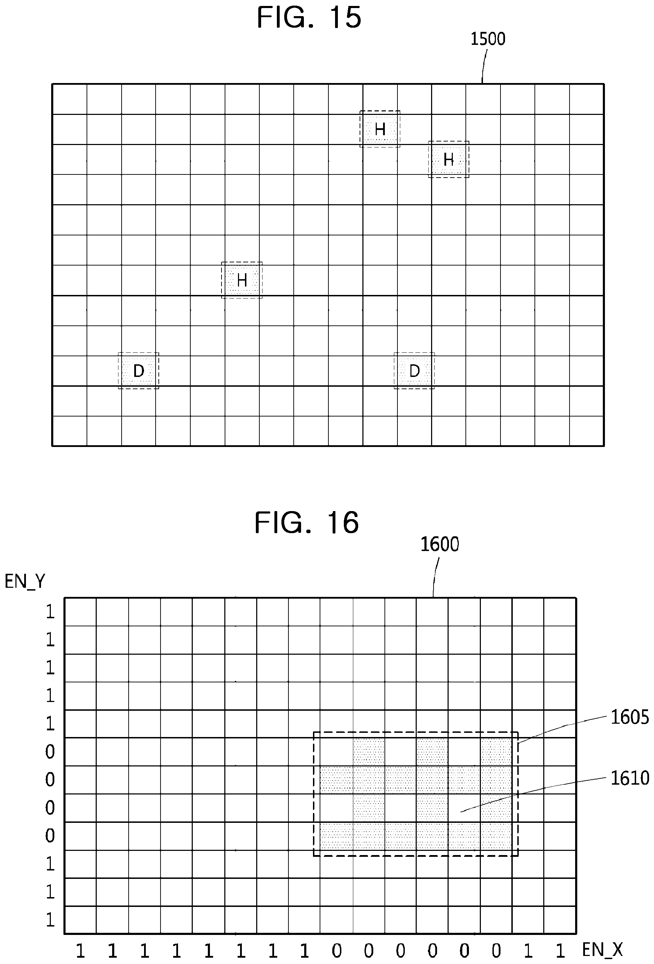

FIG. 15 is a view of a pixel array in a random access mode according to an example embodiment. Referring to FIG. 15, hot pixels H and dead pixels D are illustrated in a pixel array 1500. A power control circuit, included in each pixel of the pixel array 1500, may include a memory cell. As described above, a control block may interrupt power supplied to a portion of pixels H and D by storing digital low in the memory cell included in the portion of the pixels H and D in the random access mode.

FIG. 16 is a view of a pixel array, in which pixels have different power control circuit structures, according to an example embodiment. Referring to FIG. 16, a pixel array 1600 and regions 1605 and 1610 are illustrated. The region 1605 refers to a monitoring region, and as described in FIG. 13, the pixel array 1600 may reduce a resolution of the region 1605 in the region monitoring mode. In an example embodiment of FIG. 13, the respective pixels may have identical power control circuit structures while using a plurality of control signals, while in an example embodiment of FIG. 16, the respective pixels may have different power control circuit structures while using a single control signal.

For example, each pixel, corresponding to the region 1610 for 1/4 sampling, of pixels included in the region 1605 may include a power control circuit having a structure in which the power control circuit includes a memory cell as illustrated in FIG. 5. Each of the other pixels, included in the region 1605, may include a power control circuit, having a structure in which the power control circuit includes a logic gate circuit as illustrated in the example embodiment of FIG. 4, or a structure in which the power control circuit includes transistors as illustrated in the example embodiment of one of FIGS. 6 through 8. In an example embodiment, in order to operate the pixel array 1600 in the region monitoring mode, only a single control signal EN_X and EN_Y may be used.

In addition to the above-described example embodiments, the structure of the per-pixel power control circuit included in the pixel array 1600 can be modified. Thus, various operating modes of the pixel array 1600 may be implemented.

The operations or steps of the methods or algorithms described above can be embodied as computer readable codes on a computer readable recording medium, or to be transmitted through a transmission medium. The computer readable recording medium is any data storage device that can store data which can be thereafter read by a computer system. Examples of the computer readable recording medium include read-only memory (ROM), random-access memory (RAM), compact disc (CD)-ROM, digital versatile disc (DVD), magnetic tape, floppy disk, and optical data storage device, not being limited thereto. The transmission medium can include carrier waves transmitted through the Internet or various types of communication channel. The computer readable recording medium can also be distributed over network coupled computer systems so that the computer readable code is stored and executed in a distributed fashion.

At least one of the components, elements, modules or units represented by a block as illustrated in FIGs. 1, 2 and 9 (e.g., the signal processor 112, the control block 113, and the processor 910) may be embodied as various numbers of hardware, software and/or firmware structures that execute respective functions described above, according to an exemplary embodiment. For example, at least one of these components, elements, modules or units may use a direct circuit structure, such as a memory, a processor, a logic circuit, a look-up table, etc. that may execute the respective functions through controls of one or more microprocessors or other control apparatuses. Also, at least one of these components, elements, modules or units may be specifically embodied by a module, a program, or a part of code, which contains one or more executable instructions for performing specified logic functions, and executed by one or more microprocessors or other control apparatuses. Also, at least one of these components, elements, modules or units may further include or may be implemented by a processor such as a central processing unit (CPU) that performs the respective functions, a microprocessor, or the like. Two or more of these components, elements, modules or units may be combined into one single component, element, module or unit which performs all operations or functions of the combined two or more components, elements, modules or units. Also, at least part of functions of at least one of these components, elements, modules or units may be performed by another of these components, elements, modules or units. Further, although a bus is not illustrated in the above block diagrams, communication between the components, elements, modules or units may be performed through the bus. Functional aspects of the above exemplary embodiments may be implemented in algorithms that execute on one or more processors. Furthermore, the components, elements, modules or units represented by a block or processing steps may employ any number of related art techniques for electronics configuration, signal processing and/or control, data processing and the like.

While exemplary embodiments have been shown and described above, it will be apparent to those skilled in the art that modifications and variations could be made without departing from the scope of the present inventive concept, as defined by the appended claims.

## Claims

1. An event-based sensor comprising:
a pixel array comprising a plurality of pixels, and configured to output an activation signal in response to sensing an input to the pixel array; and
a controller configured to output a control signal for supplying power selectively to the pixels based on the activation signal or a user input so that a portion of the pixels is powered on while another portion of the pixels is powered off.

2. The event-based sensor of claim 1, wherein each of the pixels comprises:
a pixel circuit configured to output the activation signal; and
a power control circuit to supply or interrupt the power to the pixel circuit based on the control signal.

3. The event-based sensor of claim 2, wherein the power control circuit comprises at least one of:
a logic gate circuit configured to operate based on the control signal; and
a memory cell configured to operate based on the control signal,
wherein each of the logic gate and the memory cell outputs an output signal which controls to supply or interrupt the power to the pixel circuit according to a result of the operation.

4. The event-based sensor of claim 2, wherein the power control circuit comprises at least one transistor configured to switch the power to the pixel circuit based on the control signal, and
wherein each of the pixels further comprises at least one pull down transistor configured to prevent a drain of the at least one transistor from floating.

5. The event-based sensor of claim 2, wherein the power control circuit comprises at least one transistor supplying or interrupting the power to the pixel circuit, based on the control signal, and
wherein the pixel array further comprises at least one common pull down transistor configured to prevent drains of a plurality of transistors, included in the pixels, from floating.

6. The event-based sensor of claim 2, wherein the power control circuit comprises at least one transistor supplying or interrupting the power to the pixel circuit, based on the control signal,
wherein the control signal comprises a row control signal, controlling a row of the pixel array, and a column control signal, controlling a column of the pixel array, and
wherein the at least one transistor comprises a first transistor configured to supply or interrupt the power to the pixel circuit, based on the column control signal, and a second transistor configured to supply or interrupt the power to the pixel circuit, based on the row control signal.

7. The event-based sensor of claim 6, wherein each of the pixels further comprises:
a first pull down transistor configured to prevent a drain of the first transistor from floating, based on the column control signal; and
a second pull down transistor configured to prevent a drain of the second transistor from floating, based on the row control signal.

8. The event-based sensor of claim 1, wherein the controller outputs the control signal according to an operating mode of the event-based sensor which is determined based on characteristics of the activation signal.

9. The event-based sensor of claim 8, wherein the characteristic of the activation signal comprise at least two of a type of the input, a number of inputs including the input to the pixel array, a position of the input in the pixel array, a time of receiving the input at the pixel array, and a temperature of one or more pixels among the pixels.

10. The event-based sensor of claim 9, wherein the operating mode is one of:
a sub-sampling mode in which the power is supplied to a sub-sampling area in the pixel array;
a region of interest mode in which the power is supplied to a region of interest in the pixel array;
a region blocking mode in which the power is interrupted to a blocking region in the pixel array;
a region monitoring mode in which the power is supplied to a portion of pixels included in a monitoring region in the pixel array; and
a random access mode in which the power is interrupted to a malfunction pixel among the pixels.

11. The event-based sensor of claim 2, wherein the power control circuit included in a first selected portion of the pixels has a first structure comprising a memory cell,
wherein the power control circuit included in a second selected portion of the pixels has a second structure comprising a logic gate or at least one transistor, and
wherein each of the memory cell and the logic gate outputs an output signal to supply or interrupt the power to the pixel circuit based on the control signal, and the transistor is configured to switch the power to the pixel circuit based on the control signal.

12. An event-based sensor comprising:
a pixel circuit configured to output an activation signal in response to sensing an input to the pixel circuit; and
a power control circuit to supply or interrupt power to the pixel circuit based on a control signal input to the power control circuit.

13. The event-based sensor of claim 12, wherein the power control circuit comprises at least one of:
a logic gate circuit configured to operate based on the control signal; and
a memory cell configured to operate based on the control signal,
wherein each of the logic gate and the memory cell outputs an output signal which controls to supply or interrupt the power to the pixel circuit according to a result of the operation.

14. The event-based sensor of claim 12, wherein the power control circuit comprises at least one transistor configured to switch the power to the pixel circuit based on the control signal, and
wherein the pixel circuit comprises at least one pull down transistor configured to prevent a drain of the at least one transistor from floating.

15. The event-based sensor of claim 12, wherein the power control circuit comprises at least one transistor configured to switch the power to the pixel circuit based on the control signal, and
wherein the control signal comprises a row control signal, controlling a row of the pixel array, and a column control signal, controlling a column of the pixel array, and
wherein the at least one transistor comprises a first transistor configured to supply or interrupt the power to the pixel circuit, based on the column control signal, and a second transistor configured to supply or interrupt the power to the pixel circuit, based on the row control signal.

16. The event-based sensor of claim 12, wherein the control signal is generated according to an operating mode of the event-based sensor which is determined based on characteristics of the activation signal.

17. The event-based sensor of claim 16, wherein the characteristic of the activation signal comprise at least two of a type of the input, a number of inputs including the input to the pixel array, a position of the input in the pixel array, a time of receiving the input at the pixel array, and a temperature of one or more pixels among the pixels.

18. The event-based sensor of claim 17, wherein the operating mode is one of:
a sub-sampling mode in which the power is supplied to a sub-sampling area in the pixel array;
a region of interest mode in which the power is supplied to a region of interest in the pixel array;
a region blocking mode in which the power is interrupted to a blocking region in the pixel array;
a region monitoring mode in which the power is supplied to a portion of pixels included in a monitoring region in the pixel array; and
a random access mode in which the power is interrupted to a malfunction pixel among the pixels.

19. An event-based sensor comprising:
a pixel array comprising a plurality of pixels each of which is configured to sense an input and output an activation signal in response to the input; and
a controller configured to output a control signal to control selective power supply to the pixels by pixel according to an operating mode determined based on characteristics of the activation signal or a user input.

20. The event-based sensor of claim 19, wherein each of the pixels comprises:
a pixel circuit configured to sense the input; and
a power circuit configured to switch power to the pixel circuit according to the control signal, and
wherein the power circuit comprises at least one of a logic gate circuit and a memory cell configured to receive at least one pair of signals as the control signal,
wherein each of the logic gate and the memory cell is configured control to supply the power to the pixel circuit according to the pair of signals.

21. The event-based sensor of claim 20, wherein the control signal comprises at least one row control signal and at least one column control signal,
wherein the row control signal is provided to the power circuit of pixels in a same row of the pixel array at a same time, and the column control signal is provided to the power circuit of pixels in a same column of the pixel array at a same time.

22. The event-based sensor of claim 19, wherein the input comprises change in intensity of light incident on the pixel array.

23. The event-based sensor of claim 19, wherein the characteristic of the activation signal comprise at least two of a type of the input, a number of inputs including the input to the pixel array, a position of the input in the pixel array, a time of receiving the input at the pixel array, and a temperature of one or more pixels among the pixels, and
wherein the operating mode is a mode in which a selected portion of the pixels is powered on while another portion of the pixels is not powered off.

24. The event-based sensor of claim 23, wherein the controller is further configured to change the operating mode to a fully activated mode in which all of the pixels are powered on, in response to a predetermined condition is satisfied since the operating mode is set.

25. The event-based sensor of claim 24, wherein the predetermined condition is one of:
that a number of the activation signals received during a predetermined time interval exceeds a predetermined threshold;
that a predetermined time period has elapsed; and
that a restriction by the user input to set the operation mode is released.
